# EUROPÄISCHE PATENTSCHRIFT

(11) **EP 1 052 145 B1**
(45) Veröffentlichungstag und Bekanntmachung des Hinweises auf die Patenterteilung: **16.01.2008**
(21) Anmeldenummer: 00108068.8
(22) Anmeldetag: 25.04.2000
(51) Int. Cl.: B60Q 3/02

(54) **Beleuchtungseinrichtung mit einer Vorrichtung zur Befestigung eines Beleuchtungselementes**
Lighting device with a fastening device for lighting element
Dispositif d'illumination avec un Dispositif de fixation d'un élément d'éclairage

(30) Priorität: 12.05.1999 DE 19921968
(43) Veröffentlichungstag der Anmeldung: 15.11.2000
(73) Patentinhaber: Volkswagen Aktiengesellschaft, 38436 Wolfsburg (DE)
(72) Erfinder: Müller, Michael, 38518 Gifhorn (DE)

(56) Entgegenhaltungen:
- DE-A- 3 324 048
- DE-A- 4 217 267
- DE-A- 19 622 779
- US-A- 5 615 944
- US-A- 5 678 914

## Beschreibung

Die Erfindung betrifft eine Beleuchtungseinrichtung, insbesondere zum Einbau im Innenraum eines Kraftfahrzeuges, umfassend ein im Wesentlichen stabförmiges Beleuchtungselement und eine Vorrichtung zur Befestigung des Beleuchtungselementes an einem Formteil im Innenraum eines Kraftfahrzeuges, insbesondere an einem Formhimmel, wobei die Vorrichtung mindestens ein erstes, im Querschnitt C-förmiges Befestigungselement zum partiellen Umfassen des Beleuchtungselementes und zwei zweite Befestigungselemente umfasst, die mit dem ersten Befestigungselement verbunden sind und zwischen denen das erste Befestigungselement angeordnet ist

Aus der US 5,615,944 ist eine Beleuchtungseinrichtung bekannt, bei der ein stabförmiges Beleuchtungselement an einem Formteil im Innenraum eines Kraftfahrzeuges angebracht wird. Das Befestigungselement ragt dabei nach unten aus dem Formteil in den Innenraum des Fahrzeuges hinaus und nimmt über ein im Querschnitt c-förmiges Befestigungselement das Beleuchtungselement auf. Weiterhin ist ein zweites Element mit dem ersten Befestigungselement verbunden, das seinerseits über Stirnseiten mit dem Formteil verbindbar ist.

Weiterhin ist aus der DE 33 24 048 eine Vorrichtung zum Befestigen von Schläuchen oder Kabeln am Rande eines Bleches bekannt. Diese besteht aus einem Profil aus plastischem Material, welche in Querschnitt zwei in entgegengesetzter Richtung geöffnete Hohlkehle aufweist. Die eine Hohlkehle dient zum stirnseitigen Befestigen der Vorrichtung auf dem Rand eines Bleches, die andere Hohlkehle dient zur clipsbaren Aufnahme eines Schlauches oder Kabels.

Weiterhin ist ein Formhimmel für einen Fahrzeuginnenraum eines Personenkraftwagens aus der DE 297 06 751 U1 bekannt. Der bekannte Formhimmel weist eine formstabile Verkleidungsschale auf, die aus einem Kunststoffschaum einteilig hergestellt ist. Die Verkleidungsschale ist durch Befestigungsmittel an einer Unterseite eines Fahrzeugdaches des Personenkraftwagens festlegbar und erstreckt sich über die gesamte Länge und Breite des Fahrzeugdaches, so daß dieses durch die Verkleidungsschale flächig abgedeckt ist.

Aus der DE 297 19 024 U1 ist ein derartiger Formhimmel bekannt, bei dem die Verkleidungsschale mit einer sich auf Höhe einer Fahrzeugmittellängsachse in Fahrzeuglängsrichtung über die Länge der Verkleidungsschale erstreckenden Mittelkonsole versehen ist, die über eine Unterseite der Verkleidungsschale abragt und die einen Aufnahmeschacht zur Führung von elektrischen Leitungen und/oder von Luftkanälen aufweist. Dabei kann die Mittelkonsole einstückig aus der Verkleidungsschale ausgeformt oder auch in Form eines Kanalgehäuses auf die Verkleidungsschale aufgesetzt sein. Aufgrund der einfachen Herstellbarkeit wird jedoch die einstückige Ausformung der Mittelkonsole aus der Verkleidungsschale bevorzugt. Der durch die Mittelkonsole gebildete, sich über die gesamte Länge der Verkleidungsschale erstreckende Aufnahmeschacht ermöglicht die zentrale Verlegung aller elektrischen Leitungen für die Funktionsaggregate, die im Dachhimmel integriert sind, insbesondere für Innenbeleuchtungen, eine hochgesetzte Bremsleuchte, Verkehrsüberwachungs- oder Innenraumüberwachungskameras, Lautsprecher, Mikrofon und andere elektrische oder elektronische Bauteile. Durch das Vorsehen des Aufnahmeschachtes ist es auch möglich, Luftkanäle zur Klimatisierung des Fahrzeuginnenraumes in den Frontbereich und/oder in den Fondbereich zu führen, wobei die Luftführungskanäle Teile einer Heizung- und/oder Klimaanlage des Personenkraftwagens sind. In gegenüberliegenden Seitenstegen der Mittelkonsole sind über die Länge der Verkleidungsschale erstreckte Leuchtmittel integriert, die an ein elektrisches Bordnetz anschließbar sind und die derart in Fahrzeugquerrichtung nach außen ausgerichtet sind, daß in Funktion der Leuchtmittel die Unterseite der Verkleidungsschale zumindest teilweise angestrahlt wird. Dadurch wird mit einfachen Mitteln eine indirekte Beleuchtung des Fahrzeuginnenraumes geschaffen, die Blendwirkungen für die Fahrgäste verhindert. Die Verteilung der Leuchtmittel über die gesamte Länge der Verkleidungsschale ermöglicht eine gleichmäßige Ausleuchtung des gesamten Fahrzeuginnenraumes. Gemäß dieser Ausgestaltung können entweder eine Vielzahl von über die Länge der Verkleidungsschale verteilt angeordneten Leuchtmitteln oder aber auch nach dem Prinzip der Elektrolumineszenz arbeitende Leuchtbänder eingesetzt werden, die sich in Fahrzeuglängsrichtung erstrecken.

Weiter ist es bekannt, die Beleuchtung von Konturen mit Lichtwellenleitern im Innenraum von Kraftfahrzeugen vorzunehmen. Beispielsweise ist in einem Sitzschalter, der in einem Serienfahrzeug der Firma Mercedes Benz AG verbaut ist, die Beleuchtung der Sitzschalterkontur mit Hilfe eines Lichtwellenleiters realisiert. Diese bekannte Konturbeleuchtung ist derart aufgebaut, daß der Lichtwellenleiter selbst nicht sichtbar ist, sondern hinter dem Bedienerpanel liegt, das an der zu beleuchtenden Kontur lichtdurchlässig ausgebildet ist. Damit wird der Lichtwellenleiter durch das teilweise lichtdurchlässig ausgebildete Bedienpanel vor Berührung und Abnützung geschützt.

Als Lichtwellenleiter kommen hauptsächlich hierfür handelsübliche PMMA-Fasern (Polymethylmethacrylat) zum Einsatz. Diese Fasern weisen je nach Länge der zu beleuchtenden Kontur einen Durchmesser von 0,2 bis 3,0 mm auf. Die PMMA-Fasern werden mit einem zusätzlichen Schutzmantel auch in der Automobilindustrie zur Datenübertragung verwendet. Der Vorteil derartiger Kunststoffasern gegenüber Glasfasern liegt in der unproblematischen Bearbeitung und in der hohen Elastizität bei den hier verwendeten dickeren Fasern. Die hohe Elastizität ist notwendig, damit auch kleinere Biegeradien der zu beleuchtenden Kontur möglich sind.

Die Lichteinspeisung erfolgt an den beiden Enden der Lichtleitfaser mit Leuchtdioden (LED).
Um bei einer Länge von ca. 0,5 m auch in der Mitte der Kontur noch genügend Intensität zu erhalten, ist ein Faserdurchmesser von etwa 1,5 mm notwendig. Noch dickere Fasern wirken für eine Konturbeleuchtung jedoch zu klobig.

Des weiteren ist für eine konstante Helligkeit entlang der Kontur eine maschinelle Bearbeitung der Oberfläche der Lichtleitfaser notwendig. Dies ist jedoch ein gängiges Verfahren, das von verschiedenen Firmen beherrscht wird. Dabei wird je nach dem im Bereich der Lichtleitfaser gewünschten Biegeradius deren Oberfläche unterschiedlich behandelt. Grundsätzlich ist hierzu anzuführen, daß je enger der Biegeradius ist, desto größer ist bereits die an sich in der Lichtleitfaser per se vorhandene Lichtstreuung an der Oberfläche, so daß dort eine geringere oder gar keine Oberflächenbehandlung notwendig ist. Auf gerade verlaufenden Strecken der Lichtleitfaser muß jedoch die Oberfläche speziell behandelt werden, damit auf dieser Strecke ausreichend Licht nach außen emittiert wird.

Zur Befestigung derartiger Lichtwellenleiter zu diesem Verwendungszweck sind bei der bekannten Sitzschalterkonturbeleuchtung Klipse (Klammern) an das Panel mit angespritzt. Das heißt, der Lichtwellenleiter wird in die Halteklipse eingedrückt, so daß er dort fest sitzt.

Zur Erzielung spezieller designtechnischer Ausgestaltungen - allgemein Lichteffekte an Gegenständen - an der Oberfläche eines Innenausstattungsteils, wie beispielsweise eines Kraftfahrzeuges und insbesondere einer Randkontur eines solchen Ausstattungsteils, ist eine derartige Befestigung jedoch problematisch. Zum einen ist es an sich aus designtechnischen Gründen oftmals unerwünscht, daß Befestigungsklipse sichtbar sind. Zum anderen ist der Lichtwellenleiter bei der bekannten Einrichtung vor direkter Berührung nicht geschützt und unterliegt verschiedensten Umwelteinflüssen, wie beispielsweise Feuchtigkeit, scharfe Putzlösungsmittel und dergleichen. Derartige Umwelteinflüsse können aber insbesondere bei einem Einsatz in einem Kraftfahrzeug möglicherweise die gewünschte Funktion des Lichtwellenleitern stark beeinträchtigen.

Aus der DE 197 24 486 A1 ist eine Befestigungsvorrichtung zum Befestigen eines Lichtwellenleiters an beispielsweise einem Randbereich eines Kraftfahrzeugsitzes, einem Bereich einer Instrumentenkonsole oder einer Fahrzeugtür bekannt, mit einem in seiner Längserstreckungsrichtung ein zur Aufnahme des Lichtwellenleiters dienendes Hohlteil bildenden Materialstreifen, der im Querschnitt gesehen ein sich von dem Hohlteil weg erstreckendes, als Befestigungsfahne dienendes Streifenteil aufweist.

Aus der WO 98/29277 ist ein Beleuchtungssystem für ein Massenbeförderungsmittel bekannt, dessen Beleuchtungselemente als lateral und vertikal lichtemittierende Lichtwellenleiter ausgebildet sind. Die Lichtwellenleiter sind zur Verbesserung der lateralen Abstrahlcharakteristik mit Einschnitten ausgebildet, die sich auf einer Seite des Lichtwellenleiters über dessen volle Länge erstrecken. Diese Einschnitte führen zu Diskontinuitäten des Brechungsprofils des Lichtwellenleiters, so daß verstärkt im Bereich der Einschnitte lateral abgestrahlt wird. Zur Befestigung des Lichtwellenleiters beispielsweise in einem verspiegelten Lampengehäuse werden verschiedene alternative Befestigungsmittel vorgeschlagen, beispielsweise ein geschlitzter Montagering, der kraftschlüssig den Lichtwellenleiter umfaßt und Rastmittel aufweist, die in korrespondierende Öffnungen im Lampengehäuse einrastbar sind. Weiter wird ein Befestigungsmittel vorgeschlagen, das den Lichtwellenleiter radial vollständig umfaßt und sich über dessen ganze Länge erstreckt und zur Befestigung in einem Panel mit einem im Querschnitt T-Steg ausgebildet ist, der mit einer Nut im Panel korrespondiert, wobei das Befestigungsmittel einstückig mit dem Lichtwellenleiter ausgebildet ist. Alternativ kann der Querschnitt auch die Form eines Tannenbaumes aufweisen. Dieses Beleuchtungssystem weist einige Nachteile auf, die insbesondere bei Personenkraftwagen ins Gewicht fallen. Durch die Ausbildung mit einem Lampengehäuse mit segmentweise den Fahrzeugsitzen zugeordneten Linsen-Segmenten weist das Beleuchtungssystem eine beträchtliche Bautiefe auf. In PKWs mit ihrer im Vergleich zu Massenbeförderungsmitteln geringen Bauhöhe ist dieses System in dem vorhandenen Bauraum nicht oder nur schwer zu realisieren. Ein weiterer Nachteil ist, daß für das Befestigungssystem mechanische Vorhaltungen an Formteilen getroffen werden müssen. Ein weiterer Nachteil ist, daß die den Lichtwellenleiter total umfassende Befestigung das Emissionsverhalten des Lichtwellenleiters negativ beeinflußt.

Der Erfindung liegt das technische Problem zugrunde, eine gattungsgemäße, insbesondere zum Einbau im Innenraum eines Kraftfahrzeuges geeignete Beleuchtungseinrichtung zu schaffen, welche wenig Bauraum benötigt, selbst einfach zu montieren ist und eine einfache Befestigung des Beleuchtungselementes ermöglicht.

Ein weiteres technisches Problem liegt in der Bereitstellung eines mit Beleuchtungselementen ausgestatteten bzw. ausstattbaren Formteils sowie einer Beleuchtungseinrichtung zur Montage an ein derartiges Formteil.

Die Lösung des technischen Problems ergibt sich durch die Gegenstände mit den Merkmalen von Patentansprüch 1. Weitere vorteilhafte Ausgestaltungen der Erfindung ergeben sich aus den Unteransprüchen.

Durch die Ausbildung der Vorrichtung mit mindestens einem ersten, im Querschnitt C-förmigen Befestigungselement zum partiellen Umfassen des Beleuchtungselementes und mindestens einem zweiten Befestigungselement, das mit dem ersten Befestigungselement verbunden ist und derart ausgebildet ist, daß es über eine Stirnseite des Formteils auf das Formteil steckbar ist, läßt sich im einfachsten Fall die Vorrichtung ohne mechanische Vorhaltungen am Formteil an diesem befestigen. Zur Verbesserung der Festigkeit der Verbindung zwischen dem zweiten Befestigungselement und dem Formteil können zusätzlich an der Innenseite des zweiten Befestigungselementes Widerhaken angeordnet sein. Dadurch, daß am Formteil selbst keine Vorhaltungen zwingend sind, können einerseits bereits eingebaute Formteile nachgerüstet werden und andererseits trotz des gleichen Formteils unterschiedliche Ausstattungen in der Serienproduktion realisiert werden, was eine erhebliche Kostenersparnis darstellt. Das im Querschnitt C-förmige Befestigungselement erlaubt eine einfache Montage des stabförmigen Beleuchtungselementes, wobei stabförmig primär dessen Längserstreckung charakterisiert werden soll, also auch quader- oder streifenförmige Beleuchtungselemente umfaßt. Des weiteren behindert das erste Befestigungselement nicht eine laterale Abstrahlung in den Innenraum des Kraftfahrzeuges. Weiter erlaubt das C-förmige Befestigungselement auch eine leichte nachträgliche Montage oder Demontage des Beleuchtungselementes. Sind die Beleuchtungselemente beispielsweise als stoßempfindliche Leuchtstoffröhren ausgebildet, so können diese nach Montage der Formteile einschließlich der Befestigungsvorrichtung noch nachträglich montiert werden. Ebenso kann ein defektes Beleuchtungselement demontiert werden, ohne die Vorrichtung zur Befestigung vom Formteil zu lösen.

In einer bevorzugten Ausführungsform sind die ersten und zweiten Befestigungselemente einstückig ausgebildet.

Vorzugsweise ist auch das zweite Befestigungselement im Querschnitt C-förmig, so daß es einfach auf das Formteil steckbar ist. Zur Erhöhung der Festigkeit der Verbindung kann der Teil des Befestigungselementes, der auf der dem Innenraum abgewandten Seite des Formteils aufliegt, etwas verlängert ausgebildet sein.

Die Längsabmessungen der Befestigungselemente sind um ein Vielfaches kleiner als die Längsabmessungen der Beleuchtungselemente. Dies ermöglicht eine flexible Anordnung und Verwendung der Vorrichtung bei unterschiedlichen baulichen Voraussetzungen.

Das Formteil bzw. die Beleuchtungseinrichtung mit der erfindungsgemäßen Vorrichtung zur Befestigung eines Beleuchtungselementes erlaubt ein einfaches nachträgliches Ausstauschen der Beleuchtungselemente bzw. ein einfaches Montieren der Beleuchtungseinrichtung am Formteil.

Die Erfindung wird nachfolgend anhand eines bevorzugten Ausführungsbeispiels näher erläutert. Die Fig. zeigen:
- Fig. 1: eine Vorderansicht einer an einem Formhimmel befestigten Vorrichtung zur Befestigung eines Beleuchtungselementes,
- Fig. 2: eine perspektivische Darstellung der Vorrichtung zur Befestigung und
- Fig. 3: eine Seitenansicht einer Vorrichtung zur Befestigung.

Die Vorrichtung 1 zur Befestigung eines im wesentlichen stabförmigen Beleuchtungselementes 2 an einem Formhimmel 3 umfaßt ein erstes, im Querschnitt C-förmiges Befestigungselement 4 und ein zweites, ebenfalls im Querschnitt C-förmiges Befestigungselement 5, die miteinander verbunden sind. Im montierten Zustand ist das zweite Befestigungselement 5 über eine Stirnseite auf den Formhimmel 3 aufgesteckt. Das erste Befestigungselement 4 dient zur Aufnahme des Beleuchtungselementes 2 und liegt zwischen dem Formhimmel 3 und einem weiteren Formteil 6, das eine Verkleidung oder ein Seitenteil bildet, wobei das Formteil 6 das Befestigungselement 4 leicht überragt und somit einen gewissen Sichtschutz bildet. Das im Querschnitt C-förmige zweite Befestigungselement 5 ist mit einer zusätzlichen stegförmigen Verlängerung 7 ausgebildet, die die Auflagefläche auf dem Formhimmel 3 vergrößert.

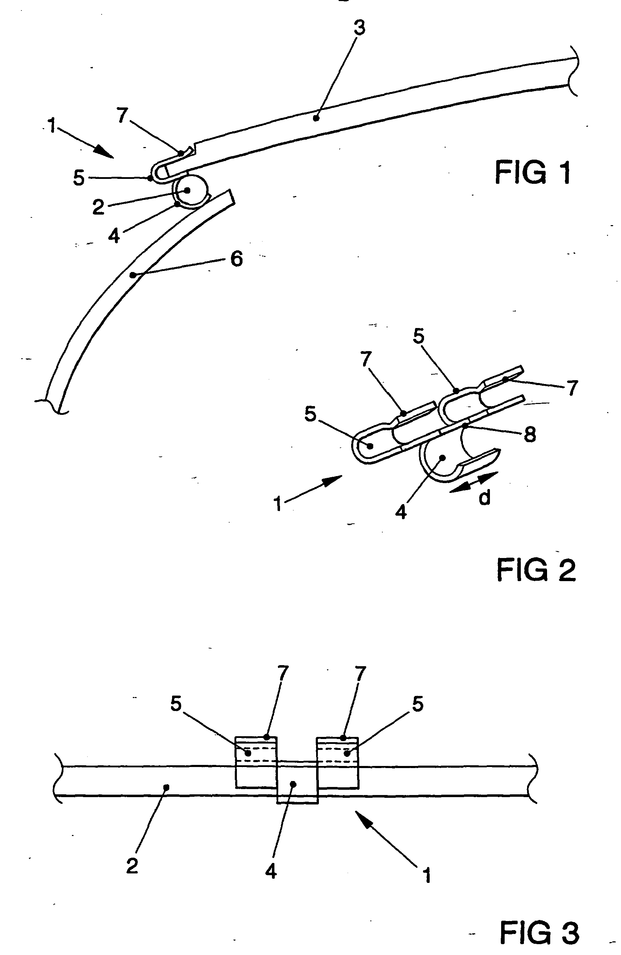

In der Fig. 2 ist eine Ausführungsform der Vorrichtung 1 perspektivisch dargestellt. Die Vorrichtung 1 umfaßt ein erstes Befestigungselement 4 und zwei zweite Befestigungselemente 5, die jeweils wieder mit stegförmigen Verlängerungen 7 ausgebildet sind. Alle drei Befestigungselemente 4, 5 sind über einen gemeinsamen Steg 8 miteinander verbunden. Die Längsabmessung des ersten Befestigungselementes 4 ist annähernd so groß wie die Dicke des Beleuchtungselementes, um eine gewisse Torsionssteifigkeit zu gewährleisten. Das Befestigungselement 4 ist vorzugsweise aus Metall oder Kunststoff, so daß durch eine gewisse Biegsamkeit bzw. Elastizität das Befestigungselement 4 gut an verschiedene Querschnittsformen der Beleuchtungselemente anpaßbar ist.

In der Fig. 3 ist eine weitere Ausführungsform der Vorrichtung 1 mit einem befestigten Beleuchtungselement 2 in einer Seitenansicht dargestellt. Im Gegensatz zur Ausführungsform gemäß Fig. 2, wo ein erstes und ein zweites Befestigungselement gegenüberliegend angeordnet sind, ist hier das erste Befestigungselement 4 zwischen den beiden zweiten Befestigungselementen 5 versetzt angeordnet.

Die Beleuchtungselemente können beispielsweise als Leuchtstoffröhren oder als vertikal und/oder lateral emittierende Lichtwellenleiter ausgebildet sein. Zusätzlich kann das erste Befestigungselement mit Justage-Elementen ausgebildet sein, die mit korrespondierenden mechanischen Codierungen der Beleuchtungselemente einen definiert ausgerichteten Einbau der Beleuchtungslemente ermöglichen.

## Patentansprüche

1. Beleuchtungseinrichtung, insbesondere zum Einbau im Innenraum eines Kraftfahrzeuges, umfassend ein im Wesentlichen stabförmiges Beleuchtungselement (2) und eine Vorrichtung (1) zur Befestigung des Beleuchtungselementes (2) an einem Formteil im Innenraum eines Kraftfahrzeuges, insbesondere an einem Formhimmel, wobei die Vorrichtung mindestens ein erstes, im Querschnitt C-förmiges Befestigungselement (4) zum partiellen Umfassen des Beleuchtungselementes und zwei zweite Befestigungselemente (5) umfasst, die mit dem ersten Befestigungselement (4) verbunden sind und zwischen denen das erste Befestigungselement (4) angeordnet ist,
**dadurch gekennzeichnet, dass**
die zweiten Befestigungselemente (5) über eine Stirnseite des Formteils auf das Formteil steckbar sind, und die Längsabmessung des ersten Befestigungselementes (4) zwischen den beiden Befestigungselementen (5) mindestens so groß wie die Dicke des Beleuchtungselementes (2) ist.

2. Beleuchtungseinrichtung nach Anspruch 1, **dadurch gekennzeichnet, dass** die ersten und zweiten Befestigungselemente (4, 5) einstückig ausgebildet sind.

3. Beleuchtungseinrichtung nach Anspruch 1 oder 2, **dadurch gekennzeichnet, dass** das oder die zweiten Befestigungselemente (5) im Querschnitt C-förmig ausgebildet sind.

4. Beleuchtungseinrichtung nach einem der vorhergehenden Ansprüche, **dadurch gekennzeichnet, dass** das Beleuchtungselement als Lichtwellenleiter ausgebildet ist.

5. Beleuchtungseinrichtung nach einem der vorangegangenen Ansprüche, **dadurch gekennzeichnet, dass** die ersten und zweiten Befestigungselemente (4, 5) aus Kunststoff oder Metall ausgebildet sind.

6. Beleuchtungseinrichtung nach einem der vorangegangenen Ansprüche, **dadurch gekennzeichnet**, das die Längsabmessungen der Befestigungselemente (4, 5) ein Vielfaches kleiner als die Längsabmessung des Beleuchtungselementes (2) sind.

## Claims

1. Illuminating device, in particular to be installed in the interior of a motor vehicle, comprising a substantially rod-shaped illumining element (2) and an apparatus (1) for fastening the illuminating element (2) to a moulded part in the interior of a motor vehicle, in particular to a moulded roof lining, wherein the apparatus comprises at least one first fastening element (4), which has a C-shaped cross section, for partially gripping the illuminating element, and two second fastening elements (5) which are connected to the first fastening element (4) and between which the first fastening element (4) is arranged, **characterized in that** the second fastening elements (5) can be plugged onto the moulded part via a front face of the moulded part and the longitudinal dimension of the first fastening element (4) between the two fastening elements (5) is at least as large as the thickness of the illuminating element (2).

2. Illuminating device according to Claim 1, **characterized in that** the first and second fastening elements (4, 5) are of unipartite design.

3. Illuminating device according to Claim 1 or 2, **characterized in that** the second fastening element or elements (5) are designed to have a C-shaped cross section.

4. Illuminating device according to one of the preceding claims, **characterized in that** the illuminating element is designed as an optical waveguide.

5. Illuminating device according to one of the preceding claims, **characterized in that** the first and second fastening elements (4, 5) are formed from plastic or metal.

6. Illuminating device according to one of the preceding claims, **characterized in that** the longitudinal dimensions of the fastening elements (4, 5) are many times smaller than the longitudinal dimension of the illuminating element (2).

## Revendications

1. Dispositif d'éclairage, notamment à intégrer dans un habitacle d'un véhicule automobile, comprenant un élément d'éclairage (2) sensiblement en forme de barre et un dispositif (1) pour fixer l'élément d'éclairage (2) sur une partie moulée dans l'habitacle d'un véhicule automobile, notamment sur un plafond moulé, le dispositif comprenant au moins un premier élément de fixation (4) de section transversale en forme de C servant à enchâsser partiellement l'élément d'éclairage et deux deuxièmes éléments de fixation (5) qui sont connectés au premier élément de fixation (4) et entre lesquels est disposé le premier élément de fixation (4),
**caractérisé en ce que**
les deuxièmes éléments de fixation (5) peuvent être enfoncés sur la pièce moulée par le biais d'un côté frontal de la pièce moulée, et la dimension en longueur du premier élément de fixation (4) entre les deux éléments de fixation (5) étant au moins aussi grande que l'épaisseur de l'élément d'éclairage (2).

2. Dispositif d'éclairage selon la revendication 1, **caractérisé en ce que** les premier et deuxièmes éléments de fixation (4, 5) sont réalisés d'une seule pièce.

3. Dispositif d'éclairage selon la revendication 1 ou 2, **caractérisé en ce que** le ou les deuxièmes éléments de fixation (5) sont réalisés avec une section transversale en forme de C.

4. Dispositif d'éclairage selon l'une quelconque des revendications précédentes, **caractérisé en ce que** l'élément d'éclairage est réalisé sous forme de guide d'ondes lumineuses.

5. Dispositif d'éclairage selon l'une quelconque des revendications précédentes, **caractérisé en ce que** les premier et deuxièmes éléments de fixation (4, 5) sont réalisés en plastique ou en métal.

6. Dispositif d'éclairage selon l'une quelconque des revendications précédentes, **caractérisé en ce que** les dimensions en longueur des éléments de fixation (4, 5) sont très largement inférieures à la dimension en longueur de l'élément d'éclairage (2).
